# EUROPEAN PATENT SPECIFICATION

(11) **EP 3 268 521 B1**
(45) Date of publication and mention of the grant of the patent: **16.06.2021**
(21) Application number: 16709605.6
(22) Date of filing: 08.03.2016
(51) Int. Cl.: D03D 1/00, D03D 15/00

(54) **LIGHT GUIDE, LIGHTING DEVICE AND VEHICLE PART**
LICHTLEITER, BELEUCHTUNGSVORRICHTUNG UND FAHRZEUGTEIL
GUIDE DE LUMIÈRE, DISPOSITIF D'ÉCLAIRAGE ET PARTIE DE VÉHICULE

(30) Priority: 10.03.2015 EP 15158518
(43) Date of publication of application: 17.01.2018
(73) Proprietor: SMR Patents S.à.r.l., 2453 Luxembourg (LU)
(72) Inventor: MEIER, Eugen, 71254 Ditzingen (DE); CHAMBERLAIN, David, New Milton Hampshire BH255JG (GB); SHEPHERD, Robert, Portchester Hampshire PO169SD (GB)
(74) Representative: Weber-Bruls, Dorothée
(86) International application number: PCT/IB2016/051290
(87) International publication number: WO 2016/142845

(56) References cited:
- EP-A2- 1 106 910
- DE-A1- 19 748 636
- DE-A1-102012 013 105
- DE-U1-202006 006 387
- GB-A- 2 427 955
- US-A- 4 234 907
- US-A1- 2011 269 358

## Description

The invention relates to a vehicle lighting device according to the pre-amble of claim 1. The invention further relates to a vehicle part with such a lighting device.

Light guides, in particular for lighting devices for vehicles, are known by the state of the art i. e. in the technical field of rear view mirrors of vehicles. The known light guides in rear view mirrors are used for turning signals by guiding light from a light source through an illumination portion of the light guide. Further there are known several lighting devices as exterior or interior lights of vehicles using lenses or light guides to provide the function of the respective light, i.e. headlight, back light, indirect lighting, etc.

The known light guides for lighting devices in vehicles need a voluminous body space, which has to be hold for in the respective vehicle part.

Light guides made out of woven optical fibres for the use on the outer surface of aircrafts are known by US 2004/0037091 A1.

DE 10 2012 013 105 A1 describes a textile fabric, which has at least one fabric layer with warp and weft threads and at least one light emission layer abutting onto the first fabric layer in a flat manner and is connected to this and is formed for the conduction and the emission of light. A prefabricated article known from GB 2 427 955 A comprises at least one side emitting light fibre attached to its outer surface. The at least one fibre is preferably in the form of a tail that comprises a bundle of fibre optic strands contained within a polymer sheath. The side emitting light fibre may be of polymer construction or may contain cracked glass strands. Two or more fibre tails may be attached to the article and they can either be interwoven with one another or they can be separate.

US 2011/269358 A1 discloses a luminous fabric which includes a plurality of first light-reflecting fiber units, a plurality of light-guiding fiber units, and a plurality of light-accumulating fiber units. The first light-reflecting fiber units are directed toward a first direction and spaced apart in intervals. The light-guiding fiber units are directed toward a second direction and spaced apart in intervals. Each light-guiding fiber unit has a lateral light-guiding portion. Some light-accumulating fiber units are drawn through the first light-reflecting fiber units, and some other light-accumulating fiber units are drawn through the light-guiding fiber units. Thereby, the luminous fabric can provide passive illumination when a light source is provided, and provide active illumination in dark settings. The light reflected by the luminous fabric is concentrated and uniformly distributed on one side thereof.

A fabric with light-conducting fibers as described in DE 20 2006 006 387 U1 fits like a sandwich between first and second outer layers. Industrial foil production can be utilized to produce a flat lighting element. A textile fabric can be used like a foil. Two fiber tips are fixed appropriately on each side or only on one side.

US 4 234 907 A refers to a light emitting fabric in which optical fibers are part of the weave, replacing some of the threaded fibers, whereby the fabric is uniformly illuminated and, accordingly, decorated. The individual optical fibers are gathered into a bundle at one end of the fabric and illuminated by a light source. Light traveling through the fibers is emitted in small amounts throughout the lengths thereof through small scratches that pierce the outer coating. Uniformity and intensity of light are enhanced by providing a reflective coating on the non-illuminated ends of the optical fibers.

A lighting device is describe in EP 1 106 910 A2 and has one or more light decoupling elements for creating a preset light distribution, one or more sources of light fitted remote from the light decoupling elements, and one or more fibre optic light guides for connecting the source of light to the light decoupling elements.

It is the purpose of the invention to further develop the known vehicle lighting devices to be space-saving and provide an improved light decoupling behavior.

The task is achieved by the features of the characterizing part of claim 1.

The optical fibres are fixed to the socket by the coupling section of the optical fibres. In the socket the coupling sections of the optical fibres are aligned to receive light from a light source and to input said light into the optical fibres. In principle the coupling sections of the optical fibres can be fixed in the socket in such a manner that their direction of extension is cross or angular to the direction of beam of the light source. It is preferred that the direction of beam of the light source and the direction of extension of the optical fibres are parallel to each other.

By having the at least one reflective element in the woven flat body and in the at least one light decoupling section of the optical fibres the emitting behavior of the light guide can be improved. Further, by using a woven flat body comprising at least partly the plurality of optical fibres the light guide is compact and space-saving.

The woven flat body comprises non-optical fibres, in form of fiberglass and/or carbon. The optical fibres and the non-optical fibres build a fabric. As the non-optical fibres are made of fiberglass and/or carbon, the light guide can be used as a hardcover for a vehicle part. Therefore, the system of cover of a vehicle part and of light guide attached to the cover can be designed by a reduced number of components.

The woven flat body comprises at least one reflecting element to decouple light from the optical fibres.

The reflecting element is realized easy and cost-efficient as the at least one reflecting element comprises reflecting threads, shreds or particles, in particular having a metallic surface.

To increase the life circle of a light guide it is advantageously if light guide has a protection layer, which comprises a, in particular translucent, opaque and/or colored, coating and/or that the light guide comprises an additional, in particular translucent, opaque and/or colored, coating.

The ability of emitting a light is increased as some or all of the optical fibres comprise a reflecting end portion.

In principle only one illumination section can be provided by the light guide. To increase the applicability of the light guide it is advantageously if first optical fibres are disposed in or at a first socket and comprise a first light decoupling section being part of a first illumination section of the woven flat body, if second optical fibres are disposed in or at a second socket and comprising a second light decoupling section being part of a second illumination section of the woven flat body and/or if further optical fibres are disposed in or at a further socket and comprising a further light decoupling section being part of a further illumination section of the woven flat body.

By having first optical fibres, second optical fibres and/or further optical fibres or plurality of illumination section can be illuminated. Doing so, the light guide can be used as turn signal using the first illumination section and light spot display, using the second illumination section, and as bending light in the further illumination section, having a single light guide. As the first optical fibres are disposed in or at a first socket and the second optical fibres are disposed in or at a second socket said fibres can be illuminated by light comprising different colors. Therefore the first and the second illumination section can be placed on the same section of the woven flat body building a multi-color arrangement. Therefore, a compact and space-saving display unit for emergency vehicles can be provided.

Also, the first illumination section and the second illumination section can be adapted to create colored streams of color, or segments of different color, wherein the first illumination section and the second illumination section can be adapted to be turned off or on independently. The light source, for example, a LED light could dictate the emitted light color. Advantageously, such arrangements could find application in emergency vehicle flashing light, for example in blue in combination with an amber indicator. Others might, for example, include green for doctors in the UK

Also, the woven flat body can be constructed as tight sinusoidal wave for creating an effect of multiple light sources, preferably wherein the light output is consistent along the illuminated length. The term "constructed as tight sinusoidal wave" can be used to refer to a mounting situation where the woven flat body is arranged in different horizontal levels following a sinusoidal wave.

Here, for example, sections of the mirror or camera scalp could create the broken effect of multiple light sources. Advantageously, this type of construction makes non-orthodox light illumination feasible.

In case the woven flat body would be constructed as a flexible tube enabling the illumination section to be guided into position. This would enable a very flexible solution for production that can also be removed for maintenance or repair.

For allowing the woven flat body to be installed in components having limited installation space, the woven flat body could be adapted to enable curved sections to be created with a radius of curvature of 5mm or less.

The vehicle lighting device of the invention comprises at least one light source, in particular a light emitting diode (LED), at least one socket for receiving light from the light source and at least one light guide, comprising at least one woven flat body and a plurality of optical fibres which at least partly build the flat body, wherein all or some of the optical fibres comprise at least one coupling section, each coupling section is disposable or disposed in or at the at least one socket to receive light from the light source, and wherein the optical fibres comprise at least one light decoupling section being part of at least one illumination section of the woven flat body, wherein the woven flat body and/or the at least one light decoupling section of the optical fibres comprise at least one reflecting element to decouple light from the optical fibres, with the reflecting element being used in the light decoupling section of the optical fibres.

Further, the lighting device can comprise at least one optic element, in particular a lens, prism, filter and/or reflector, disposed between the/each light source and each/the socket to interact with the light emitted by the light source.

To extend the applicability of the lighting device it has been found advantageously if the lighting device comprises at least one control unit to at least regulate the intensity and/or color of the respective light emitted by at least one of the at least one light source.

Generally, the at least one light source can be realized by any light source emitting light that is visible for human beings. In one embodiment of the lighting device it is preferred that the at least one light source comprises at least one light emitting diode (LED), in particular an RGB tri colour LED for variable output color.

By using a light emitting diode the light emitted by the diode is mainly adjusted in one direction. Therefore, the percentage of input of light emitted by the LED is high.

Further, it has been found advantageously if the lighting device comprises a plurality of light sources, optic elements, sockets and bundles of optical fibres, first optical fibres being disposed in or at a first socket and comprising a first light decoupling section being part of a first illumination section of the woven flat body, second optical fibres being disposed in or at a second socket and comprising a second light decoupling section being part of a second illumination section of the woven flat body and/or further optical fibres being disposed in or at a further socket and comprising a further light decoupling section being part of a further illumination section of the woven flat body.

Also, in one embodiment of the lighting device it is preferred that the light source is located away from the illumination section, preferably the light source is located several meters away from the illumination section, and/or wherein the light source is located in a dry area of the vehicle, whereas the illumination section is located in a wet area of the vehicle. Optical fibres can be passed through door hinges and sections of an automotive vehicle with no loss of illumination level.

The invention also provides a vehicle part, in form of a rear view mirror, an external camera, a camera pod, aside direction-indicator, an interior light, a frontlight or a backlight comprising a lighting device.

Finally it has been found advantageously, that the vehicle part comprises an outer cover.

The lighting device and the vehicle part are advantages in several aspects:
- By building the light guide out of a woven flat body comprising a plurality of optical fibres the light guide can be build compact and space-saving.
- By using at least one reflecting element in the woven flat body, that is in the at least one light decoupling section of the optical fibres, the coupling of light can be increased. However, just for transmitting the light, there is no need to have a metallic backing or reflective material to help transmission of the light.
- By using a plurality of light sources, sockets and bundles of optical fibres the applicability of the light guide can be increased.
- By building the cover of a vehicle part out of the light guide the number of several parts of the vehicle part can be produced with a reduced number of components.

The high intensity light output from the end of the optical fibres makes the lighting device highly suitable as a side direction-indicator, as fitted to a rear view mirror or camera pod.

The various advantages of the present invention will become apparent to a person skilled in the art by reading the following specification and sub-joined claims and by reference in the following drawings:
- Figure 1:: a schematic illustration of a lighting device;
- Figure 2:: a further schematic illustration of the lighting device according to figure 1; and
- Figures 3a, 3b:: a top view cross section and a front schematic view of a rear view device having a light-guide comprising a woven flat body that is constructed as tight sinusoidal wave installed thereon.

The figures show an embodiment of a lighting device 2. The lighting device 2 comprises a light source 4 emitting light in direction of a socket 6. Between the light source 4 and the at least one socket 6 an optic element 8 is disposed. In the embodiment shown in the figures the light source 4 comprises a light emitting diode (LED) and the optic element 8 comprises a lens.

The lighting device 2 further comprises a light guide 10 comprising a woven flat body 12 and a plurality of optical fibres 14, which at least partly build the flat body 12. The plurality of optical fibres 14 provide a coupling section 16, each coupling section 16 disposed in the socket 6 to receive light from the light source 4. Further, the optical fibres 14 comprise a light decoupling section 18 being a part of an illumination section 20 of the woven flat body 12.

To increase the light decoupling, the woven flat body 12 and the at least one light decoupling section 18 over the optical fibres 14 comprise at least one reflecting element 22.

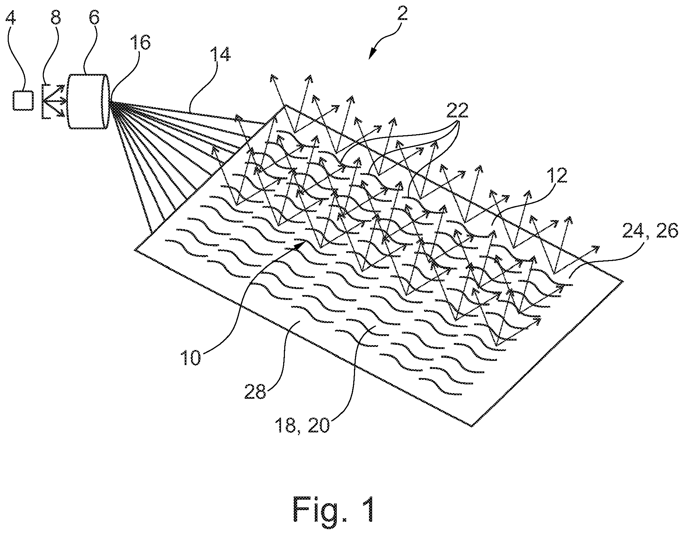

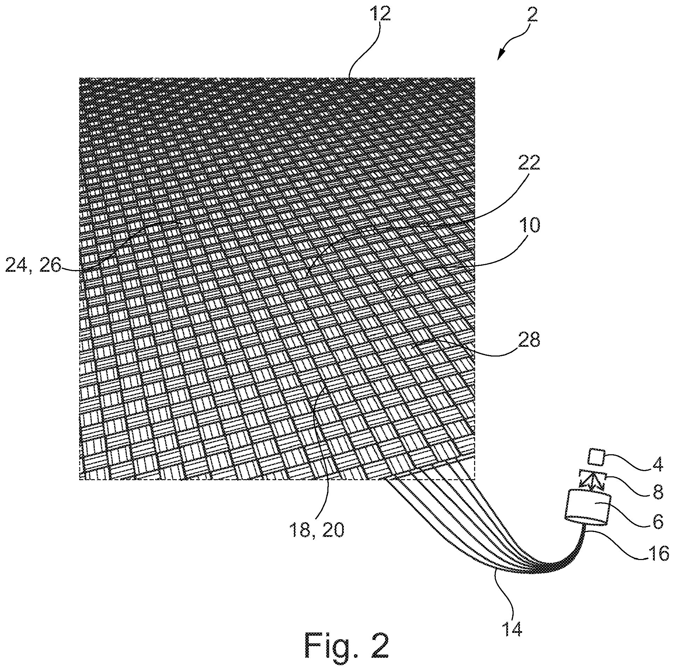

To increase the light circle of the light guide 10, the light guide comprises a translucent protection layer 24 is realized by the embodiment shown in figure 1 and 2 by a translucent coating 26.

Further, the woven flat body 12 comprises a plurality of non-optical fibres 28 when build with the optical fibres 14 fabric.

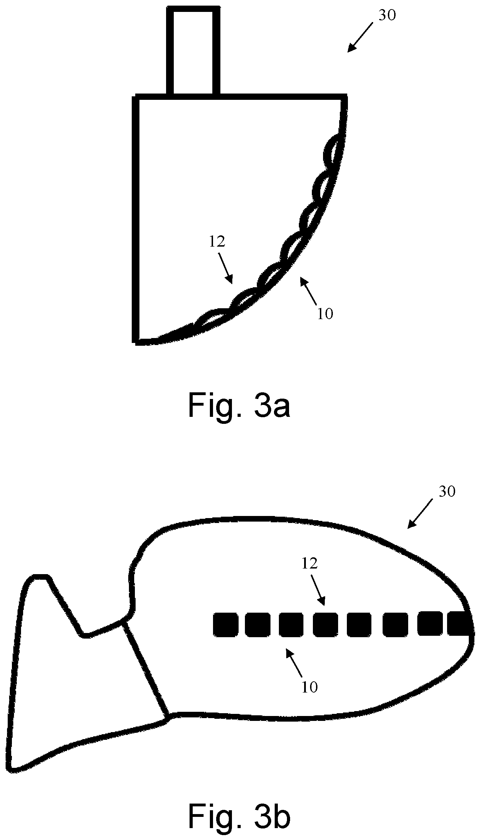

Figures 3a, 3b show a top view cross section and a front schematic view of a rear view device 30 having a light-guide 10 comprising a woven flat body 12 that is constructed as tight sinusoidal wave installed thereon. To create the effect of having multiple light sources installed, the woven flat body 12 is arranged in different depths following a sinusoidal wave as it can be best seen from figure 3a. However, the skilled person would know that other effects might be also realized, for example, by constructing the flat body 12 as triangular or trapezoidal wave. Also, the skilled person would know that a plurality of horizontally arranged light-guides 10 can be vertically constructed above each other.

### Reference sign list

- 2: lighting device
- 4: light source
- 6: socket
- 8: optic element
- 10: light guide
- 12: woven flat body
- 14: optical fibres
- 16: coupling section
- 18: light decoupling section
- 20: illumination section
- 22: reflecting element
- 24: protection layer
- 26: coating
- 28: non-optical fibres
- 30: rear view mirror

## Claims

1. Vehicle lighting device (2) comprising:
at least one light source (4), in particular a light emitting diode (LED),
at least one socket (6) for receiving light from the light source (4) and
at least one light guide (10), comprising at least one woven flat body (12) and a plurality of optical fibres (14) which at least partly build the flat body,
wherein all or some of the optical fibres (14) comprise at least one coupling section (16),
each coupling section (16) is disposed in or at the at least one socket (6) to receive light from the light source (4), and
wherein the optical fibres (14) comprise at least one light decoupling section (18) being part of at least one illumination section (20) of the woven flat body (12),
wherein the woven flat body (12) comprises at least one reflecting element (22) to decouple light from the optical fibres,
**characterized in that**
the light guide (10) is adapted to be used as a hardcover for a vehicle part as the woven flat body (12) comprises non-optical fibres (28), which are made of fiberglass and/or carbon and build a fabric with the optical fibres (14), with the at least one light decoupling section (18) of the optical fibres (14) comprising the at least one reflecting element (22) to decouple light from the optical fibres (14), wherein some or all of the optical fibres (14) comprise a reflecting end portion.

2. Vehicle lighting device (2) according to claim 1, **characterized by** at least one optic element (8), in particular a lens, prism, filter and/or reflector, disposed between the/each light source (4) and each/the socket (6) to interact with the light emitted by the light source (4).

3. Vehicle lighting device (2) according to claim 1, **characterized by** at least one control unit to at least regulate the intensity and/or color of the respective light emitted by at least one of the at least one light source (4).

4. Vehicle lighting device (2) according to any of claims 1, **characterized in that** the at least one light source (4) comprises at least one light emitting diode (LED), in particular an RGB tri colour LED for variable output color.

5. Vehicle lighting device (2) according to claim 1, **characterized by** a plurality of light sources (4), optic elements (8), sockets (6) and bundles of optical fibres, whereby first optical fibres (14) being disposed in or at a first socket (6) and comprising a first light decoupling section (18) being part of a first illumination section (20) of the woven flat body (12), second optical fibres being disposed in or at a second socket and comprising a second light decoupling section being part of a second illumination section of the woven flat body (12) and/or further optical fibres being disposed in or at a further socket and comprising a further light decoupling section being part of a further illumination section of the woven flat body (12).

6. Vehicle lighting device (2) according to claim 1, **characterized in that** the light source (4) is located away from the illumination section (20), preferably the light source is located several meters away from the illumination section (20), and/or wherein the light source (4) is located in a dry area of the vehicle, whereas the illumination section (20) is located in a wet area of the vehicle.

7. Vehicle lighting device (2) according to claim 1, **characterized in that** the woven flat body (12) is constructed as tight sinusoidal wave for creating an effect of multiple light sources, preferably wherein the light output is consistent along the illuminated length.

8. Vehicle lighting device (2) according to claim 7, **characterized in that** the vehicle lighting device (2) is adapted to be used in sections of a mirror or camera scalp to create the broken effect of multiple light sources.

9. Vehicle part, in form of a rear view mirror, an external camera, a camera pod, a side direction-indicator, an interior light, a front light or a backlight, comprising a lighting device (2)according to one of claims 1 to 8.

## Patentansprüche

1. Fahrzeugbeleuchtungsvorrichtung (2), umfassend:
mindestens eine Lichtquelle (4), insbesondere eine Leuchtdiode (LED),
mindestens eine Fassung (6) zum Empfangen von Licht von der Lichtquelle (4) und
mindestens einen Lichtleiter (10), der mindestens einen gewebten Flachkörper (12) und eine Mehrzahl von optischen Fasern (14), die mindestens teilweise den Flachkörper ausbilden, umfasst,
wobei alle oder manche von den optischen Fasern (14) mindestens einen Kopplungsabschnitt (16) umfassen,
jeder Kopplungsabschnitt (16) in oder an der mindestens einen Fassung (6) zum Empfangen von Licht von der Lichtquelle (4) angeordnet ist und
wobei die optischen Fasern (14) mindestens einen Lichtauskopplungsabschnitt (18) umfassen, der ein Teil von mindestens einem Leuchtabschnitt (20) des gewebten Flachkörpers (12) ist,
wobei der gewebte Flachkörper (12) mindestens ein reflektierendes Element (22) umfasst, um Licht aus den optischen Fasern auszukoppeln,
**dadurch gekennzeichnet, dass**
der Lichtleiter (10) dazu ausgelegt ist, als steife Abdeckung für ein Fahrzeugteil verwendet zu werden, da der gewebte Flachkörper (12) nichtoptische Fasern (28) umfasst, die aus glasfaserverstärktem Kunststoff und/oder Kohlenstoff hergestellt sind und mit den optischen Fasern (14) ein Gewebe ausbilden, wobei der mindestens eine Lichtauskopplungsabschnitt (18) der optischen Fasern (14) das mindestens eine reflektierende Element (22) umfasst, um Licht aus den optischen Fasern (14) auszukoppeln, wobei manche oder alle der optischen Fasern (14) einen reflektierenden Endabschnitt umfassen.

2. Fahrzeugbeleuchtungsvorrichtung (2) nach Anspruch 1, **gekennzeichnet durch** mindestens ein optisches Element (8), insbesondere eine Linse, ein Prisma, einen Filter und/oder einen Reflektor, das zwischen der/jeder Lichtquelle (4) und jeder/der Fassung (6) dazu angeordnet ist, um mit dem von der Lichtquelle (4) emittierten Licht zu wechselwirken.

3. Fahrzeugbeleuchtungsvorrichtung (2) nach Anspruch 1, **gekennzeichnet durch** mindestens eine Steuerungseinheit, um mindestens die Intensität und/oder Farbe des jeweiligen Lichts, das von mindestens einem der mindestens einen Lichtquelle (4) emittiert wird, einzustellen.

4. Fahrzeugbeleuchtungsvorrichtung (2) nach Anspruch 1, **dadurch gekennzeichnet, dass** die mindestens eine Lichtquelle (4) mindestens eine Leuchtdiode (LED), insbesondere eine RGB-Dreifarben-LED für eine variable Ausgabefarbe, umfasst.

5. Fahrzeugbeleuchtungsvorrichtung (2) nach Anspruch 1, **gekennzeichnet durch** eine Mehrzahl von Lichtquellen (4), optischen Elementen (8), Fassungen (6) und Bündeln von optischen Fasern, wobei erste optische Fasern (14), die in oder an einer ersten Fassung (6) angeordnet sind und einen ersten Lichtauskopplungsabschnitt (18) umfassen, Teil eines ersten Leuchtabschnitts (20) des gewebten Flachkörpers (12) sind, zweite optische Fasern, die in oder an einer zweiten Fassung angeordnet sind und einen zweiten Lichtauskopplungsabschnitt umfassen, Teil eines zweiten Leuchtabschnitts des gewebten Flachkörpers (12) sind und/oder weitere optische Fasern, die in oder an einer weiteren Fassung angeordnet sind und einen weiteren Lichtauskopplungsabschnitt umfassen, Teil eines weiteren Leuchtabschnitts des gewebten Flachkörpers (12) sind.

6. Fahrzeugbeleuchtungsvorrichtung (2) nach Anspruch 1, **dadurch gekennzeichnet, dass** die Lichtquelle (4) sich entfernt von dem Leuchtabschnitt (20) befindet, wobei vorzugsweise die Lichtquelle sich mehrere Meter von dem Leuchtabschnitt (20) entfernt befindet und/oder wobei die Lichtquelle (4) sich in einem trockenen Bereich des Fahrzeugs befindet, während sich der Leuchtabschnitt (20) in einem nassen Bereich des Fahrzeugs befindet.

7. Fahrzeugbeleuchtungsvorrichtung (2) nach Anspruch 1, **dadurch gekennzeichnet, dass** der gewebte Flachkörper (12) als enge sinusförmige Welle ausgebildet ist, um einen Effekt von mehreren Lichtquellen zu erzeugen, wobei vorzugsweise die Lichtausgabe entlang der beleuchteten Länge einheitlich ist.

8. Fahrzeugbeleuchtungsvorrichtung (2) nach Anspruch 7, **dadurch gekennzeichnet, dass** die Fahrzeugbeleuchtungsvorrichtung (2) dazu ausgelegt ist, in Abschnitten einer Spiegel- oder Kameragehäuseabdeckung verwendet zu werden, um die unterbrochene Wirkung mehrerer Lichtquellen hervorzurufen.

9. Fahrzeugteil, das als Rückspiegel, Außenkamera, Kamerahalterung, seitlicher Richtungsanzeiger, Innenlicht, Frontlicht oder Rücklicht ausgebildet ist und eine Beleuchtungsvorrichtung (2) nach einem der Ansprüche 1 bis 8 umfasst.

## Revendications

1. Dispositif d'éclairage (2) pour un véhicule, comprenant :
au moins une source lumineuse (4), en particulier une diode électroluminescente (LED),
au moins une douille (6) pour la réception de la lumière de la source lumineuse (4) et au moins un guide de lumière (10), comprenant au moins un corps tissé plat (12) et une pluralité de fibres optiques (14) formant au moins en partie le corps plat,
où une partie ou toutes les fibres optiques (14) comprennent au moins une section de couplage (16),
chaque section de couplage (16) est disposée dans ou sur ladite au moins une douille (6) pour recevoir la lumière de la source lumineuse (4), et
où les fibres optiques (14) comprennent au moins une section de découplage de lumière (18) faisant partie d'au moins une section d'éclairage (20) du corps tissé plat (12),
où le corps tissé plat (12) comprend au moins un élément réfléchissant (22) pour découpler la lumière des fibres optiques,
**caractérisé en ce que**
le guide de lumière (10) est prévu pour être utilisé comme couverture rigide pour une partie de véhicule, le corps tissé plat (12) comprenant des fibres non optiques (28) en fibre de verre et/ou en carbone et formant un tissu avec les fibres optiques (14), ladite au moins une section de découplage de lumière (18) des fibres optiques (14) comprenant ledit au moins un élément réfléchissant (22) pour découpler la lumière des fibres optiques (14), une partie ou toutes les fibres optiques (14) comprenant une partie d'extrémité réfléchissante.

2. Dispositif d'éclairage (2) pour un véhicule selon la revendication 1, **caractérisé par** au moins un élément optique (8), en particulier une lentille, un prisme, un filtre et/ou un réflecteur, disposé entre la/chaque source lumineuse (4) et chaque/la douille (6) pour interagir avec la lumière émise par la source lumineuse (4).

3. Dispositif d'éclairage (2) pour un véhicule selon la revendication 1, **caractérisé par** au moins une unité de commande pour réguler au moins l'intensité et/ou la couleur de la lumière respective émise par au moins une desdites au moins une source lumineuse (4).

4. Dispositif d'éclairage (2) pour un véhicule selon la revendication 1, **caractérisé en ce que**
ladite au moins une source lumineuse (4) comprend au moins une diode électroluminescente (LED), en particulier une LED RGB tricolore pour une sortie de couleur variable.

5. Dispositif d'éclairage (2) pour un véhicule selon la revendication 1, **caractérisé par** une pluralité de sources lumineuses (4), d'éléments optiques (8), de douilles (6) et de faisceaux de fibres optiques, des premières fibres optiques (14) disposées dans ou sur une première douille (6) et comprenant une première section de découplage de lumière (18) faisant partie d'une première section d'éclairage (20) du corps tissé plat (12), des deuxièmes fibres optiques disposées dans ou sur une deuxième douille et comprenant une deuxième section de découplage de lumière faisant partie d'une deuxième section d'éclairage du corps tissé plat (12) et/ou d'autres fibres optiques disposées dans ou sur une autre douille et comprenant une autre section de découplage de lumière faisant partie d'une autre section d'éclairage du corps tissé plat (12).

6. Dispositif d'éclairage (2) pour un véhicule selon la revendication 1, **caractérisé en ce que**
la source lumineuse (4) est distante de la section d'éclairage (20), la source lumineuse est préférentiellement distante de plusieurs mètres de la section d'éclairage (20), et/ou où la source lumineuse (4) est disposée dans une zone sèche du véhicule, alors que la section d'éclairage (20) est disposée dans une zone humide du véhicule.

7. Dispositif d'éclairage (2) pour un véhicule selon la revendication 1, **caractérisé en ce que**
le corps tissé plat (12) est réalisé comme onde sinusoïdale serrée pour créer l'effet de plusieurs sources lumineuses, la sortie de lumière étant préférentiellement uniforme sur la longueur éclairée.

8. Dispositif d'éclairage (2) pour un véhicule selon la revendication 7, **caractérisé en ce que**
ledit dispositif d'éclairage (2) pour un véhicule est prévu pour être utilisé dans des sections d'un couvercle de miroir ou de caméra pour créer un effet de plusieurs sources lumineuses éclatées.

9. Partie de véhicule, sous la forme d'un rétroviseur, d'une caméra extérieure, d'une coque de caméra, d'un indicateur de direction latérale, d'une lumière intérieure, d'un feu avant ou d'un feu arrière, comprenant un dispositif d'éclairage (2) selon l'une quelconque des revendications 1 à 8.
